Europäisches Patentamt

European Patent Office

Office européen des brevets

(11) Veröffentlichungsnummer: **0 160 906**
A2

# (12) EUROPÄISCHE PATENTANMELDUNG

(21) Anmeldenummer: 85105145.8

(22) Anmeldetag: 26.04.85

(51) Int. Cl.⁴: **G 01 N 21/07**
**B 04 B 5/04**

(30) Priorität: 11.05.84 CH 2339/84
14.08.84 CH 3894/84

(43) Veröffentlichungstag der Anmeldung:
13.11.85 Patentblatt 85/46

(84) Benannte Vertragsstaaten:
AT BE CH DE FR GB IT LI NL

(71) Anmelder: KONTRON-HOLDING AG
Bernerstrasse Süd 169
CH-8048 Zürich(CH)

(72) Erfinder: Degrave, Philippe Louis
20 rue du Maréchal Foch
F-78220 Viroflay(FR)

(74) Vertreter: Körber, Wolfhart, Dr. et al,
Patentanwälte Dipl.-Ing. H. Mitscherlich Dipl.-Ing. K.
Gunschmann Dr.rer.nat. W. Körber Dipl.Ing. J.
Schmidt-Evers Dipl.-Ing. W. Melzer Steinsdorfstrasse 10
D-8000 München 22(DE)

(74) Vertreter: Buntz, Gerhard et al,
Grenzacherstrasse 124 Postfach 3255
CH-4002 Basel(CH)

(54) **Vorrichtung zur Probenüberführung und -analyse.**

(57) Vorrichtung zur Probenüberführung und -analyse mittels
Zentrifugierung mit einem Rotor, der an seiner Peripherie
Drehgelenke aufweist, mit denen Küvettenträger so verbunden sind, dass sie eine Kippbewegung um einen Winkel von
90° ausführen können, einer Feststelleinrichtung zum Festhalten der Küvettenträger in einer Schräglage und Küvettenanordnungen zum Einsatz in den Küvettenträger, wobei der
Rotor vorzugsweise die Form eines Drehbalkens besitzt, an
dessen beiden Enden zwei Küvettenträger angebracht sind
und der Küvettenträger eine kammartige Form aufweist, so
dass die Zinken zwischen die Küvettenreihen der Küvettenanordnung eingreifen. Diese Vorrichtung ermöglicht eine
Probenübertragung ohne Durchmischung des Küvetteninhalts.

Fig. 1

EP 0 160 906 A2

Kontron-Holding AG , Zürich, Schweiz

0160906

Ref. 6800/30

## Vorrichtung zur Probenüberführung und -analyse

Die Erfindung betrifft eine Vorrichtung zur Probenüberführung und -analyse mittels Zentrifugierung.

In der chemischen, biochemischen und medizinischen
Analytik sind automatisierte Analysengeräte in zunehmendem
Masse im Einsatz. Viele von ihnen arbeiten nach einer
Methode, bei der in einer oder in mehreren Stufen oder
Phasen des Analysenverfahrens Zentrifugierungen vorkommen.
Zentrifugierungen werden dabei in der Hauptsache zu folgenden Zwecken eingesetzt:

1. Zur Probenüberführung aus einer Gruppe von
Küvetten oder Probenkammern, in die die zu untersuchenden
Proben und die Reagenzien zunächst getrennt eingebracht
werden, in eine zweite Gruppe von Küvetten oder Kammern,
in denen Proben und Reagenzien vermischt werden, die zur
Bestimmung erforderliche Reaktion ablaufen kann und
schliesslich die Messung vorgenommen wird. Der wesentliche
Vorteil dieser Probenüberführung durch Zentrifugierung
besteht darin, dass eine Vielzahl von Proben gleichzeitig
mit den entsprechenden Reagenzien zusammengebracht wird,
so dass aufgrund des definierten Zeitpunkts für die Vielzahl der Proben sogenannte dynamische Messungen durchgeführt werden können. Als erstes System dieser Art gilt in
der Fachwelt das Analysengerät nach N.G. Anderson, das

Bu/ 7.3.85

beispielsweise in der deutschen Auslegeschrift 1 900 275 beschrieben ist.

2. Ein weiterer Zweck, zu dem ein Zentrifugationsschritt in Analysengeräten üblicherweise zum Einsatz kommt, ist die eigentliche klassische Zentrifugation, d.h. die schnelle Trennung von Phasen, die durch die Erdbeschleunigung nicht oder nur sehr langsam erfolgen würde. Solche Phasentrennungen werden vor allem bei Agglutinationsreaktionen vorgenommen, wie sie z.Zt. vor allem in der Immundiagnostik zunehmend an Bedeutung gewinnen.

3. Ein dritter Zweck, zu dem zentrifugiert wird dient der Unterscheidung zwischen positiver und negativer Reaktion bei einem Verfahren zur Bestimmung von Antigen oder Antikörpern etc. in einer biologischen Probe gemäss der Deutschen Offenlegungsschrift 29 07 198. Bei diesem Verfahren werden die Zellen, die negativ reagiert haben und demzufolge nicht fest an einer den Boden einer U- oder V-förmigen Küvette bedeckenden Proteinschicht haften, durch Zentrifugation abgelöst und an der tiefsten Stelle der Küvette gesammelt, während im Falle einer positiven Reaktion die Zellen aufgrund von immunologischen Bindungskräften fest haften und durch die gleiche Zentrifugalkraft nicht abgelöst werden.

Bei den immunologischen Diagnoseverfahren kommt zusätzlich zum Aspekt der Phasentrennung bei der Zentrifugation noch der Gesichtspunkt hinzu, dass die hohe Beschleunigung bei der Zentrifugation auch noch den notwendigen Kontakt zwischen den einzelnen Reaktionspartnern schneller und besser bewirkt, als dies unter der ausschliesslichen Einwirkung der Erdbeschleunigung der Fall wäre. Als weiterer Gesichtspunkt bei immunologischen Diagnoseverfahren ist zu beachten, dass sich diese Verfahren nicht wie frühere Analysen darin erschöpfen, eine Probe und ein Reagenz zusammenzubringen, sondern dass häufig eine ganze Serie von abwechselnden Waschvorgängen und Reagenzienzugaben erforderlich ist. Diese aufwendigere Kombination von Verfahrensschritten führt zwangsläufig zu komplizierteren Geräten, die diese Abfolge von Verfahrensschritten ermöglichen. Ein typisches Beispiel für ein solches verhältnismässig kompliziertes Gerät ist die in der deutschen Offenlegungsschrift 29 07 823 beschriebene Zentrifiziereinrichtung.                Dieses Gerät ist so konzipiert, dass eine Vielzahl von aufeinanderfolgenden sogenannten Waschvorgängen möglich ist.

Alternativ zu  den Verfahren mit einer Vielzahl von Waschvorgängen ist auch ein Verfahren bekannt, bei dem man den interessierenden Probenbestandteil, d.h. beispielsweise den Antigen/Antikörper-Komplex, durch eine Reinigungsschicht, beispielsweise aus einem Albumin, diffundieren lässt. Diese Diffusion wird zweckmässigerweise durch Zentrifugation beschleunigt. Voraussetzung bei der Durchführung dieses Verfahrens ist eine saubere Ueberschichtung der Reinigungsschicht mit der Probe, sodass die Probe nicht direkt an die Beschichtung des Küvettenbodens gelangen kann. Dieses Verfahren konnte bislang nur so durchgeführt werden, dass die Einbringung der Probe über der Albuminschicht manuell erfolgte und anschliessend in einer Zentrifuge mit Ausschwingrotor zentrifugiert wurde. Von den bekannten Analysenautomaten eignet sich keiner für dieses Verfahren, weil dort die Probenübertragung durch Zentrifugierung grundsätzlich mit einer Durchmischung einhergeht, die aber bei dem fraglichen Verfahren unter allen Umständen vermieden werden muss.

Der Erfindung liegt die Aufgabe zugrunde, eine Vorrichtung zur Probenüberführung und -analyse mittels Zentrifugierung bereitzustellen, mit der die Probenüberführung von einer Kammer zur anderen so erfolgen kann, dass keine Durchmischung stattfindet. Gleichzeitig sollte eine Apparatur geschaffen werden, die trotz ihrer Eignung zur Durchführung komplizierter immunologischer Analysenverfahren einfach und kostengünstig, sowohl in Bezug auf ihre Herstellung, als auch in Bezug auf ihren Einsatz, d.h. den Verbrauch an Einwegküvetten, zur Verfügung steht.

Erfindungsgemäss wird dies erreicht durch eine Vorrichtung der eingangs erwähnten Art, die sich auszeichnet durch die Kombination aus einem Antriebssystem mit einem Motor, einem durch das Antriebssystem in Drehbewegung versetzbaren Rotor, der sich von seiner mit dem Antriebssystem verbundenen Mitte symmetrisch radial nach aussen erstreckt und an seiner Peripherie Drehgelenke aufweist, Küvettenträger, die mit den Drehgelenken so verbunden sind, dass sie eine Kippbewegung um eine Tangente an einen Drehkreis, den die Gelenke beim Zentrifugieren beschreiben, als Kippachse durchführen können, wobei die Kippbewegung einen Winkel von 90$^{\circ}$ umfasst und die Küvettenträger so aufgehängt sind, dass der innerhalb des Drehkreises befindliche Teil seiner Masse grösser ist als der ausserhalb des Drehkreises, einer Feststelleinrichtung zum Festhalten der Küvettenträger in einer Schräglage und Küvettenanordnungen zum Einsatz in die Küvettenträger.

Im folgenden wird anhand der beiliegenden Zeichnung ein Ausführungsbeispiel der Erfindung beschrieben.

Es zeigen:

Fig. 1 eine erfindungsgemässe Vorrichtung teilweise im Schnitt während des Zentrifugierens

Fig. 2 einen Drehbalken mit Küvettenträger und Küvettenanordnung in Ruhestellung

Fig. 3 einen Drehbalken mit Küvettenträger ohne Küvettenanordnung in Ruhestellung

Fig. 4 einen Schnitt gemäss der Linie IV-IV in Fig. 2
Fig. 5 einen Schnitt gemäss der Linie V-V in Fig. 1.


Ein Dreharm oder Drehbalken 1 ist symmetrisch an der Welle 2 eines Motors 3 angebracht, der seinerseits in einer mit einer Oeffnung 4 versehenen Vertiefung eines Gehäuses 5 montiert ist. Anstelle des Arms oder Balkens ist auch eine andere Form eines Rotors denkbar, beispielsweise ein Drehkreuz mit vier Armen oder eine Scheibe. Der Arm oder Balken 1 weist an seinen beiden Enden je eine Gabelung 6 auf. Zwischen den beiden Zweigen oder Schenkeln der Gabeln 6 ist je ein Küvettenträger 8 angeordnet.

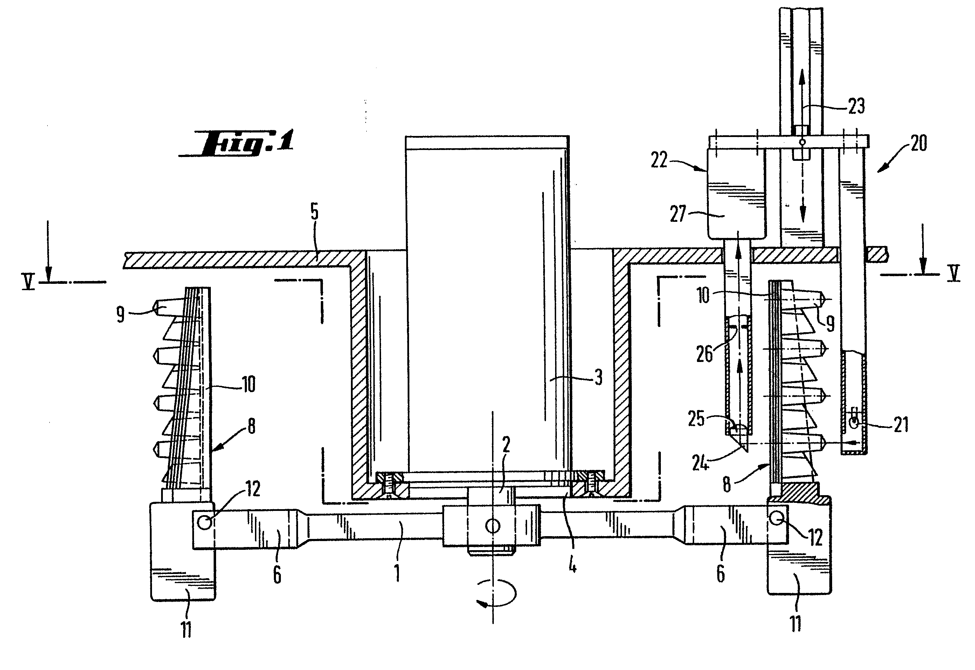

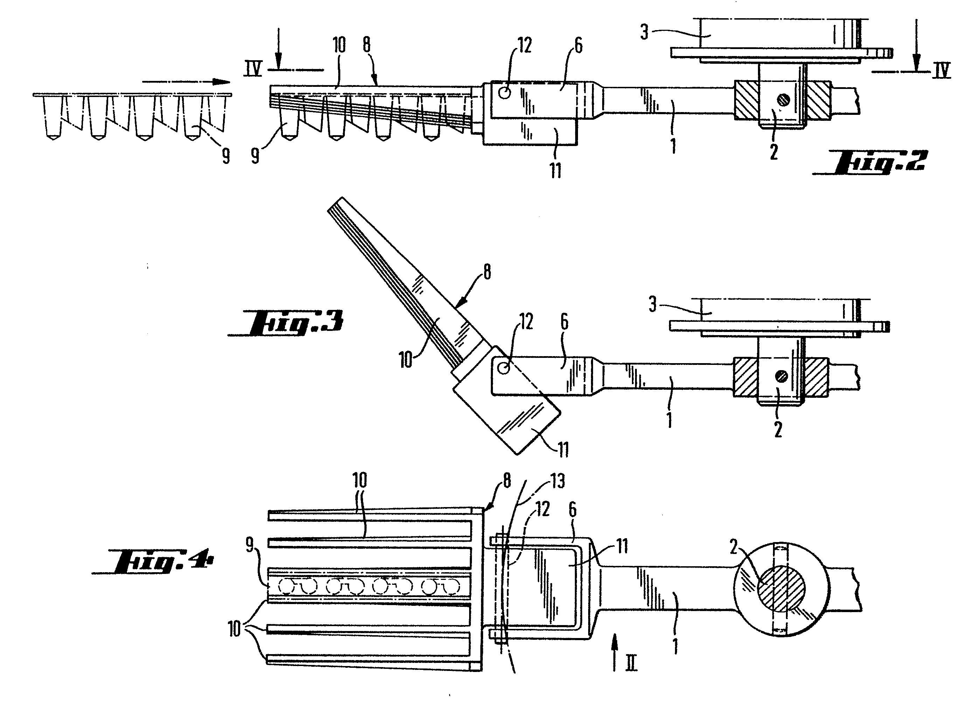

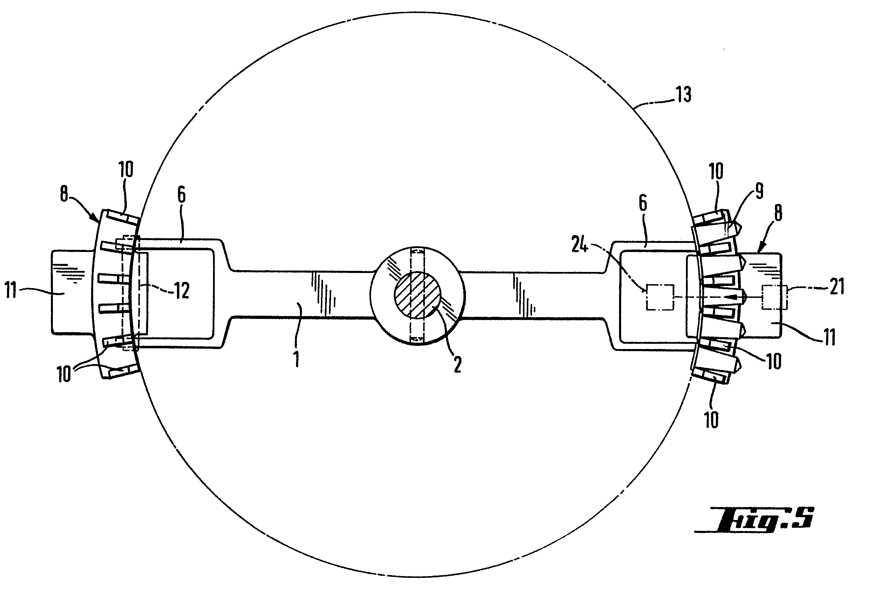

Der Küvettenträger 8 besitzt, wie am besten aus Figur 4 ersichtlich, eine kammartige Form mit Zinken 10 und einem verhältnismässig gross dimensionierten Rücken 11. Der kammförmige Küvettenträger 8 ist mittels Bolzen 12 mit den Schenkeln der Gabel so verbunden, dass er um die durch die Bolzen 12 definierte Achse, die mit einer Tangente an den Drehkreis 13 zusammenfällt, den das Gelenk beim Zentrifugieren beschreibt, schwenkbar ist. Der Küvettenträger 8 ist so dimensioniert, dass der zur Drehachse des Motors hin über die Schwenkachse der Bolzen hinausragende Rückenteil 11 schwerer ist als der restliche Teil des Rückens und die Zinken. Dies hat zu Folge, dass ohne Einwirkung äusserer Kräfte, d.h. unter dem ausschliesslichen Einfluss des Schwerkraft der Probenträger immer leicht aufgekippt ist, sodass die Zinken schräg nach oben gerichtet sind (Fig. 3). Bei der Zentrifugierung greift an dem schwereren Rückenteil 11 eine grössere Zentrifugalkraft an, die bewirkt, dass der Küvettenträger 8 vollständig aufgekippt wird, sowie es in Figur 1 gezeigt ist.

Der kammartige Küvettenträger 8 dient zur Aufnahme einer Küvettenanordnung 9, die im wesentlichen einen ähnlichen Aufbau hat, wie die bekannten und handelsüblichen Mikrotiterplatten. Die Zinken des kammförmigen Küvettenträgers und deren Abstände voneinander sind so dimensioniert, dass sie in die auf der Unterseite der Platten befindlichen Zwischenräume zwischen den einzelnen Küvetten eingreifen. Zu diesem Zweck ist allerdings im Gegensatz zu den handelsüblichen Mikrotiterplatten auf einer Seite der Platte die Seitenwand unterbrochen oder überhaupt nicht vorhanden.

Im Unterschied zu den herkömmlichen Mikrotiterplatten sind bei der Küvettenanordnung 9 für die vorliegende Vorrichtung die Küvetten je paarweise gruppiert und zwar so, dass jeweils zwei in Richtung parallel zu den Zinken nebeneinander liegende Küvetten zusammen Paare bilden. Zwischen den beiden Kammern eines Paars ist eine Verbindung vorgesehen, die darin besteht, das die normalerweise zwischen den beiden Küvetten vorhandene Trennwand eine Vertiefung aufweist, sodass eine Rinne zwischen den beiden Küvetten eines Paars die Verbindung bildet.

Auf die Einzelheiten der Konstruktion und die Funktion der verschiedenen Ausführungsformen der Küvettenanordnung 9 wird in der vorliegenden Beschreibung nicht eingegangen. Hierzu wird auf die gleichzeitig hinterlegte Patentanmeldung Nr. verwiesen. Für das Verständnis der vorliegenden Erfindung genügt die Bezugnahme auf die vorstehend beschriebene Ausführungsform bei der zwischen je zwei Küvetten eines Paars ein rinnenförmiger Verbindungskanal vorliegt. Dieser Kanal erstreckt sich, wie sich aus der Anordnung der beiden Küvetten jedes Paars ergibt in radialer Richtung in Bezug auf die Achse des Antriebsmotors.

Zur Auswertung des Analysenergebnisses ist eine optische Lesestation 20 vorhanden, die im wesentlichen aus einer Lichtquelle 21 und einem Detektor 22 besteht. Ferner enthält die Lesestation einen Vorschubmechanismus, mit dem Lichtquelle 21 und Detektor 22 in schrittweisem Vorschub nach oben oder unten bewegt werden können. Der Mechanismus zur Durchführung dieser Schrittbewegung ist von herkömmlicher Bauart und nicht im einzelnen gezeigt. Die Bewegung ist lediglich durch den Pfeil 23 angedeutet.

Lichtquelle 21 und Detektor 22 sind so angeordnet, dass der Küvettenträger 8 mit der Küvettenanordnung 9 bei der Zentrifugierung zwischen Lichtquelle und Detektor hindurchläuft.

Die Lichtquelle 21 ist so ausgebildet, dass sie die einer Küvette entsprechende Fläche gleichmässig difus ausleuchtet. Der Detektor weist ein Prisma 24 auf, das zur Umlenkung der Lichtstrahlen dient. Durch eine Art Objektiv mit einer Optik 25 und einem Spalt 26 ist das Prisma 24 mit einem Photomultiplier (Sekundärelektronenvervielfacher) 27 verbunden, mit dem die Lichtintensität eines abgebildeten Punkts bestimmt wird. Die Blende 26 hat einen Durchmesser von etwa 50 $\mu$m. Durch geeignete Wahl der Optik und mit Hilfe der Blende 26 kann die einem Küvettenboden entsprechende Fläche oder ein Teil davon in der Grösse von etwa 1,5 mm Druchmesser so abgetastet werden, dass die Lichtintensität von ca. 1 000 Einzelpunkten erfasst wird. Dabei ergeben sich die Zeilen dieser Rasterpunkte durch die Drehbewegung und die Abtastfolge, während die Schritte von Zeile zu Zeile mittels des mechanischem Vorschubs erfolgen.

0160906

Für die Messung ist folgender Ablauf vorgesehen. Die Küvettenanordnungen werden bereits ausserhalb der Vorrichtung vorbereitet, d.h. Proben und Reagenzien werden in die Küvettenanordnung eingefüllt. Zur Aufnahme des Proben-Reagenz-Gemisches dient jeweils eine Kammer jedes Paares und zwar in die innere Kammer, d.h. diejenige die bei ruhendem Dreharm jeweils der Motorachse näher liegt. Die äussere Kammer ist auf ihrem Boden mit einem Protein, beispielsweise einem Immunoglobulin, beschichtet, an das gegebenenfalls, d.h. je nach der erfolgten Reaktion in der inneren Kammer Anlagerung erfolgt oder nicht. Ausserdem befindet sich in der äusseren Kammer eine bestimmte Menge einer Flüssigkeit, die als Reinigungsfilter für die Probe dient. Zu diesem Zweck wird beispielsweise ein Albumin verwendet.

Die so vorbereitete, d.h. gefüllte Küvettenanordnung wird auf den Küvettenträger, sowie eine zweite Platte auf den zweiten Küvettenträger aufgesetzt. Dies kann durch geeignete mechanische Vorrichtungen vollautomatisch geschehen. Zu diesem Zweck wird der Arm an einer Ladestation festgehalten und gleichzeitig der Küvettenträger in waagrechte Form gebracht. In dieser Lage kann die Küvettenanordnung auf die Zinken des Küvettenträgers aufgeschoben werden.

Nach dem Aufbringen der beiden Küvettenanordnungen wird der Arm durch den Motor in Drehung versetzt. Die Drehgeschwindigkeit ist zunächst langsam und wird so gewählt, dass die Küvettenträger gegenüber der horizontalen etwa einen Winkel von 45° einnehmen. Dieser Winkel kann zusätzlich fixiert werden, indem eine Arretierung (nicht gezeigt) vorgesehen ist. In dieser Schräglage fliesst die Probe infolge der Zentrifugalkraft über den Verbindungskanal von der jeweils inneren Kammer in die äussere Kammer eines Paars. Das Proben-Reagenz-Gemisch überlagert sich der Albuminschicht, ohne dass eine Vermischung stattfindet. Nachdem die Uebertragung des Proben/Reagenz-Gemisches aus der jeweils inneren Kammer in die äussere Kammer erfolgt ist,wird, gegebenenfalls nach Lösen der Arretierung, der Motor beschleunigt und die eigentliche Zentrifugierung durchgeführt. Dabei wandert der interessierende Antigen/ Antikörper-Komplex durch die Albuminschicht und wird von ungebundenen Antikörpern    befreit, bevor er den Behälterboden erreicht. Nach der für diese Diffusion erforderlichen Zeit wird die Messung wie bereits beschrieben durchgeführt.

Je nach Grösse der Küvettenanordnungen 9 kann es erforderlich sein, dass der Küvettenträger 8 breiter ist als in Figur 4 gezeigt. Insbesondere wäre es günstig, wenn Küvettenträger mit den gleichen Abmessungen zum Einsatz gelangen könnten, wie sie die üblichen Mikrotiterplatten aufweisen. Dies hätte den Vorteil, dass für die Probenvorbereitung Maschinen eingesetzt werden können, die mit Mikrotiterplatten  arbeiten. Wenn allerdings die Küvettenanordnungen in dieser Grösse vorgesehen werden, muss der Küvettenträger 8 entsprechend dem Drehkreis gekrümmt sein, wie am besten in Fig. 5 zu erkennen ist, weil sonst der Fehler durch Unterschiede der Zentrifugalkraft bei der Zentrifugierung zu gross wäre. Entsprechend der Krümmung des Küvettenträgers muss natürlich auch die Küvettenanordnung so flexibel sein, dass sie sich dieser Krümmung anpassen kann. Dies ist aber konstruktiv ohne weiteres lösbar. Beim Einsatz von schmalen Küvettenanordnungen 9 ist der Unterschied der Zentrifugalkräfte beim Zentrifugieren bei einer nicht gekrümmten Anordnung vernachlässigbar gering, so dass eine einfachere Küvettenhalterung verwendet werden kann.

## Patentansprüche

1. Vorrichtung zur Probenüberführung und -Analyse mittels Zentrifugierung, gekennzeichnet durch die Kombination aus einem Antriebsystem mit einem Motor (3), einem durch das Antriebsystem in Drehbewegung versetzbaren Rotor (1), der sich von seiner mit dem Antriebsystem verbundenen Mitte symmetrisch radial nach aussen erstreckt und an seiner Peripherie Drehgelenke (12) aufweist, Küvettenträgern (8), die mit den Drehgelenken so verbunden sind, dass sie eine Kippbewegung um eine Tagente an einen Drehkreis, den die Gelenke beim Zentrifugieren beschreiben, als Kippachse durchführen können, wobei die Kippbewegung einen Winkel von 90° umfasst und die Küvettenträger so aufgehängt sind, dass der innerhalb des Drehkreises befindliche Teil (11) seiner Masse grösser ist als der ausserhalb des Drehkreises, einer Feststelleinrichtung zum Festhalten der Küvettenträger in einer Schräglage, und Küvettenanordnungen (9) zum Einsatz in den Küvettenträger.

2. Vorrichtung nach Anspruch 1, dadurch gekennzeichnet, dass der Rotor die Form eines Drehbalkens (1) besitzt, der sich von der Mitte in zwei einander entgegengesetzte Richtungen nach aussen erstreckt und an dessen beiden Enden zwei Küvettenträger (8) angebracht sind.

3. Vorrichtung nach Anspruch 1, dadurch gekennzeichnet, dass der Küvettenträger eine kammartige Form aufweist, wobei die Zinken (10) zwischen die Küvettenreihen der Küvettenanordnung eingreifen.

0160906

4. Vorrichtung nach Anspruch 3, dadurch gekennzeichnet, dass der Küvettenträger (8) quer zu den Zinken entsprechend dem Drehkreis der Gelenke gewölbt ist.

5. Vorrichtung nach Anspruch 1, gekennzeichnet durch eine Messeinrichtung (20) mit einer Lichtquelle (21) und einem Lichtdetektor (22), die senkrecht verschiebbar so angeordnet sind, dass die um 90$^{\circ}$ aufgekippten Küvettenträger zwischen Lichtquelle und Lichtdetektor passieren.

***

Fig.1

0160906

**Fig. 2**

**Fig. 3**

**Fig. 4**

0160906

Fig.5